# EUROPÄISCHE PATENTANMELDUNG

(11) **EP 2 816 376 A1**
(43) Veröffentlichungstag der Anmeldung: **24.12.2014**
(21) Anmeldenummer: 14156050.8
(22) Anmeldetag: 20.02.2014
(51) Int. Cl.: G01T 1/203, C09K 11/06, G01T 1/204

(54) **Verfahren zum Nachweis von Strahlung**

(30) Priorität: 19.06.2013 EP 13172798
(71) Anmelder: cynora GmbH, 76646 Bruchsal (DE)
(72) Erfinder: Volz, Daniel, 76137 Karlsruhe (DE); Grad, Tobias, 76133 Karlsruhe (DE); Hegel, Joachim, 76199 Karlsruhe (DE)
(74) Vertreter: Hoppe, Georg Johannes

(57) **Zusammenfassung**

Die Erfindung betrifft ein Verfahren zur optischen Detektion von Strahlung, aufweisend die Bereitstellung von einer ersten Komponente zur Umwandlung von Strahlung einer Energie im Bereich größer als 10³ eV in Strahlung einer Energie im Bereich von 0,5 eV bis 20 eV und einer zweiten Komponente zur Absorption von Strahlung einer Energie im Bereich von 0,5 eV bis 20 eV, wobei die zweite Komponente aufgrund der Absorption detektierbares Licht aussendet. Somit ist es einerseits möglich, ortsaufgelöst radioaktive Strahlung zu detektieren und andererseits je nach entsprechendem Messaufbau mit einer statistischen Auswertung oder durch Schichtdicken bzw. unterschiedlichen Schichtanordnungen Informationen über die Art der Strahlung zu erhalten.

## Beschreibung

Die Erfindung betrifft die Verwendung von chemischen Verbindungen (Lichtemittern) zum Nachweis von Strahlung.

### Einleitung

Im Rückbau nuklearer Anlagen ist die Detektion von Strahlung in ausgedehnten Räumen von großer Bedeutung (Marktstudie "Radiation Detection Materials Markets - 2011", NanoMarkets). Während für die Messung dieser Parameter etwa in Boden-, Wasser- oder Luftproben standardisierte Verfahren wie etwa die Gammaspektroskopie oder die Flüssigszintillation (DE 69820675 T2) existieren, stellt sich die Messung in Gebäuden schwieriger dar. Die Messung erfolgt entweder durch die Entnahme von Proben aus dem Gebäude oder die Verwendung von tragbaren Geräten zur Messung von radioaktiver Strahlung. Während bei ersterem die Zahl der nötigen Proben und das Auffinden repräsentativer Orte für die Beprobung durch die oft inhomogene Verteilung der Kontamination schwierig ist und oft viele Messungen erforderlich sind, ist bei letzterem die praktische Gestaltung der Messung von größerer Wichtigkeit: So werden im mobilen Einsatz tragbare Spektrometer auf Stativen verwendet. Die Messgeometrie, der Abstand zur Kontaminationsquelle und weitere Faktoren machen die Messung hier komplex und störanfällig (EP 2141708 A1).

Als weitere Problemfelder kommen die oft hohe Strahlenbelastung an diesen Orten hinzu, die die direkte Anwesenheit von Menschen oft nur über eng begrenzte Zeiträume möglich machen und die Tatsache, dass insbesondere Alpha- und Betastrahlung durch Luft und Materie stark abgeschwächt werden. Wenige Millimeter einer Mörtelschicht können beide Strahlungsarten stark abschwächen, sodass bei einem Messaufbau, bei dem sich zwischen Kontaminationsquelle und Detektor ein größerer Luftabstand befindet, womöglich falschnegative Befunde erhalten werden. In der Praxis muss mit automatisierten Methoden gearbeitet werden, um die Belastung für den Menschen so klein als möglich zu halten.

### Beschreibung der Erfindung

Überraschender Weise lassen sich durch Anwendung des erfindungsgemäßen Verfahrens die oben geschilderten Nachteile der Verfahren des Standes der Technik überwinden.

Ein erster Aspekt der Erfindung betrifft ein Verfahren zur optischen Detektion von Strahlung durch Bereitstellung einer ersten Komponente zur Umwandlung von Strahlung einer Energie im Bereich größer 10³ eV (bis zu 5 MeV), insbesondere alpha-, beta-, gamma- und/oder Röntgen-Strahlung, in Strahlung einer Energie im Bereich von 0,5 eV bis 20 eV und einer zweiten Komponente zur Absorption von Strahlung einer Energie im Bereich von 0,5 eV bis 20 eV. Diese zweite Komponente weist die Eigenschaft auf, aufgrund der Absorption detektierbares, insbesondere sichtbares, Licht auszusenden.

Dieses Licht kann mittels optischer Technologie, wie fotografischen Filmen, Photomultipliern oder bevorzugt CCD-Chips, detektiert und ausgewertet werden. Über die erste und zweite Komponente beziehungsweise deren Schichtdicke ist eine Diskriminierung und Unterscheidung verschiedener Strahlungsarten über Abklingzeiten und Lichtintensitäten möglich. Die über einen endlichen Zeitraum gemittelte Intensität der gemessenen Lichtsignale ist eine Funktion der Konzentration und der Energie der betrachteten Strahler. Misst man die genaue zeitliche Verteilung der Impulse, so ergibt sich durch die Zahl der Impulse pro Zeiteinheit eine Information über die Art der Nuklide, die durch die radioaktive Halbwertszeit (und damit der mittleren Wahrscheinlichkeit für das Auftreten eines Zerfallsergebnisses pro Zeiteinheit) charakterisiert wird.

In dieser genauen Impulsanalyse beeinflusst die Menge an radioaktivem Material die Höhe der Impulse. Aufgrund der Reichweite der Strahlung in Materie lässt sich durch die Dicke von Schichten bzw. die Abklingzeiten der durch Strahlung ausgelösten Fluoreszenz ebenfalls eine Aussage über die Art der Strahlung treffen. Durch Zusätze wie Gadolinium oder Borhaltigen Verbindungen, etwa Tetraphenylborate oder Boronsäuren lässt sich die Sensitivität für Neutronen erhöhen, da der Neutroneneinfangquerschnitt des Isotops B-10 besonders hoch ist. Durch diese Strategie können bei den Zerfallsprozessen entstehende Neutronen detektiert werden.

Ähnliches gilt für besonders elektronenreiche Schweratome wie lod oder Bismut, die in Form von iodierten Verbindungen wie lodoform oder Tetraiodmethan beziehungsweise metallorganischen Verbindungen wie Triphenylbismuth in die Schicht eingebracht werden können. Schwere Atome, d. h. Atome mit einer Ordnungszahl ≥ 26, können eine besonders hohe Wechselwirkung mit Gamma-Strahlung aufweisen, so dass durch derartige Additive die Sensitivität der Lumineszenzfarben für diese Strahlungsart erhöht werden kann.

Besonders vorteilhaft einsetzbar ist das erfindungsgemäße Verfahren, insbesondere bei ortsauflösender Detektion der Strahlung, beim Rückbau von kerntechnischen Anlagen, da eine flächige Verarbeitung der ersten und zweiten Komponente über unterschiedlich starke Lichtsignale eine Lokalisierung von Kontaminationsquellen ermöglicht.

Die ersten und die zweiten Komponenten lassen sich etwa durch Sprühen von Lösungen oder Aufstreichen von geeigneten Farben verarbeiten. Dies kann auch vollautomatisiert, etwa durch geeignete Roboter, durchgeführt werden. So lassen sich beispielsweise radioaktiv kontaminierte Flächen, Gebäude oder Gegenstände mit einer entsprechenden Beschichtung versehen und Hotspots von radioaktiver Strahlung lokalisieren. Eine effiziente und zielgerichtete Dekontamination wird so möglich.

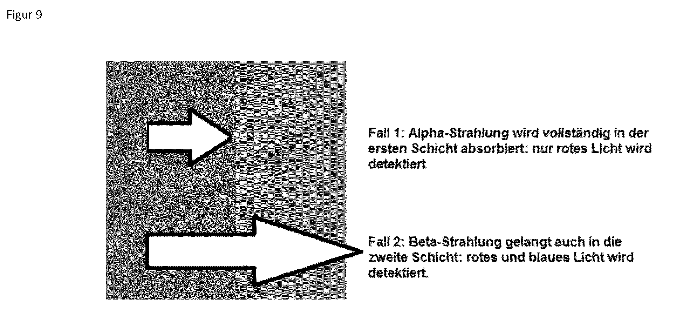

Durch das Aufbringen von mehreren Schichten einer ersten Komponente und einer zweiten Komponente übereinander lässt sich der Informationsgehalt noch erhöhen: beispielsweise kann eine rot-leuchtende Schicht aufgebracht werden, deren Dicke für eine vollständige Absorbtion von Alphastrahlung ausreicht. Auf dieser Schicht kann eine weitere, blau-leuchtende Schicht aufgetragen werden. Beta und Gamma-Strahlung würden in einer derartigen Situation aufgrund der unterschiedlichen Reichweite in Materie in der ersten Schicht nicht vollständig absorbiert und würden sowohl für die Erzeugung von rotem als auch von blauem Licht sorgen. Durch spektrale Analyse des erzeugten Lichtes lässt sich so Alphastrahlung von Betastrahlung unterscheiden (Figur 9).

Für die im erfindungsgemäßen Verfahren verwendbaren ersten Komponenten sind insbesondere die folgenden physikalischen Kriterien von Bedeutung:
- Umwandlung von hochenergetischer Strahlung (d.h. von Strahlung einer Energie im Bereich größer als 10³ eV in Strahlung einer Energie im Bereich von 0,5 eV bis 20 eV;
- Prozessierbarkeit (d.h. Löslichkeit von insbesondere ≥ 1 g/L in gängigen, das Emissionsverhalten nicht beeinflussenden Lösungsmitteln. Derartige Lösungsmittel sind insbesondere halogenierte Lösungsmittel wie Dichlormethan, Chloroform, Tetrachlorkohlenstoff, Chlorbenzol, Dichlorbenzol; aromatische Lösungsmittel wie Benzol, Toluol, Mesitylen, Xylol, Anisol; alkoholische Lösungsmittel wie Ethanol, Isopropanol, Amylalkohol, Butanol; Carbonyl-Lösungsmittel wie Essigester, NMP, Aceton, Methylethylketon; etherische Lösungsmittel wie Diethylether, THF und Dioxan. In einer bevorzugten Ausführungsform der Erfindung sind die Lösungsmittel nicht toxisch (keine halogenierten Lösungsmittel, kein Benzol, Toluol). Aus Arbeitsschutzgründen sollten beispielsweise brennbare Lösungsmittel, wie Ethanol oder Diethylether, vermieden werden.

Für die im erfindungsgemäßen Verfahren verwendbaren zweiten Komponenten sind insbesondere die folgenden physikalischen Kriterien von Bedeutung:
- Absorption von Strahlung einer Energie im Bereich von 0,5 eV bis 20 eV;
- Emission von detektierbarem, insbesondere von sichtbarem Licht;
- Prozessierbarkeit (d.h. Löslichkeit von insbesondere ≥ 1 g/L in gängigen, das Emissionsverhalten nicht beeinflussenden Lösungsmitteln, die oben genannt sind.

In einer bevorzugten Ausführungsform weist die erste Komponente mindestens ein Atom mit einer Ordnungszahl ≥ 26 und/oder mindestens ein Bor- und/oder Lithiumatom auf.

In einer weiteren Ausführungsform handelt es sich bei der zweiten Komponente um eine rein organische Verbindung, also z. B. nicht um eine Metall-Komplexverbindung.

In einer weiteren bevorzugten Ausführungsform der Erfindung liegen die erste Komponente und die zweite Komponente zusammen in der selben, also in einer chemischen Verbindung vor. Bevorzugt handelt es sich dabei um einen Übergangsmetallkomplex, insbesondere mit mindestens einem organischen Liganden bzw. um ein Komplexsalz.

In einer bevorzugten Ausführungsform handelt sich bei der in dem erfindungsgemäßen Verfahren eingesetzten, die erste und die zweite Komponente umfassende Verbindung um einen Kupfer(I)komplex, insbesondere aufweisend eine oder bestehend aus einer Struktur gemäß Formel A.

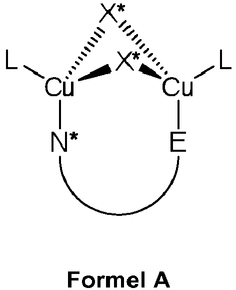

In Formel A (nachfolgend auch als Cu₂X₂(E∩N*)L₂ bezeichnet) steht E∩N* für einen chelatisierenden N-heterozyklischen Liganden, der über ein Stickstoffatom und entweder ein Phosphor-, Arsen- oder Antimonatom an den Cu₂X₂-Kern bindet, und L unabhängig voneinander für einen Phosphan-, Arsan- oder Antimon-Liganden, wobei beide Liganden L auch miteinander verbunden sein können, so dass sich ein zweibindiger Ligand ergibt, oder wobei ein Ligand L bzw. beide Liganden L auch mit E∩N* verbunden sein können, so dass sich ein dreibindiger oder vierbindiger Ligand ergibt.

Spezielle Ausführungsformen der zweikernigen Kupfer(I)komplexe der Formel A werden durch die Komplexe der Formeln I bis IV dargestellt und im Folgenden erläutert. 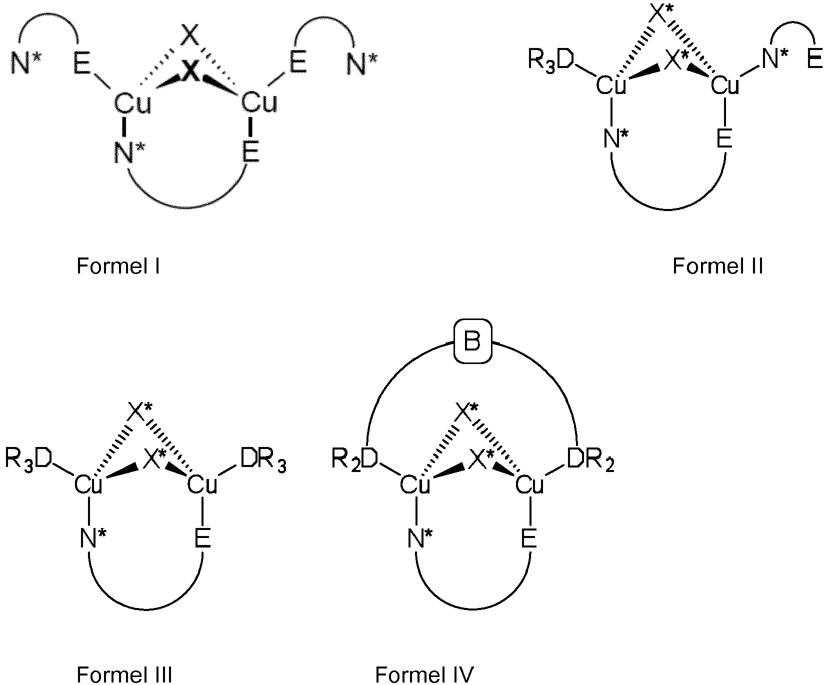 mit:
X* bzw. X = CN, SCN, N₃ und/oder insbesondere Cl, Br und/oder I (also unabhängig voneinander, so dass der Komplex zwei gleiche oder zwei unterschiedliche Gruppen X* bzw. X aufweisen kann)
E = R₂As und/oder R₂P,
N*∩E = zweibindige Liganden mit E = Phosphanyl/Arsenyl-Rest der Form R₂E (R = Alkyl, Aryl, Alkoxyl, Phenoxyl, Amid); N* = Imin-Funktion. Bei "∩" handelt es sich um ein Kohlenstoffatom. Insbesondere handelt es sich bei E um eine Ph₂P-Gruppe (Ph = Phenyl), die Imin-Funktion ist Bestandteil einer aromatischen oder heteroaromatischen Gruppe (z. B. Pyridyl, Pyrimidyl, Pyridazinyl, Triazinyl, Oxazolyl, Thiazolyl, Imidazolyl, Pyrazol, Isoxazol, Isothiazol, Triazol, Oxadiazol, Thiadiazol, Tetrazol, Oxatriazol oder Thiatriazol etc.), die optional weiter substituiert oder anneliert ist. "∩" ist ebenfalls Bestandteil dieser aromatischen Gruppe. Das Kohlenstoffatom befindet sich sowohl direkt benachbart zum Imin-Stickstoff-Atom als auch zum E-Atom.
D = unabhängig voneinander P und/oder As und/oder Sb.
R = jeweils unabhängig voneinander Wasserstoff, Halogen oder Substituenten, die über Sauerstoff- (-OR), Stickstoff- (-NR₂) oder Siliziumatome (-SiR₃) gebunden sind sowie Alkyl-(auch verzweigt oder zyklisch), Heteroalkyl-, Aryl-, Heteroaryl-, Alkenyl-, Alkinyl-Gruppen bzw. substituierte Alkyl- (auch verzweigt oder zyklisch), Heteroalkyl-, Aryl-, Heteroaryl- und Alkenyl-Gruppen mit Substituenten wie Halogene oder Deuterium, Alkylgruppen (auch verzweigt oder zyklisch), Heteroalkyl-, Aryl-, Heteroaryl- und weitere allgemein bekannte Donor- und Akzeptor-Gruppen, wie beispielsweise Amine, Carboxylate und deren Ester, und CF₃-Gruppen. Die Reste R können optional auch zu annelierten Ringsystemen führen.
B ist eine Brücke wodurch ein Rest D mit einem weiteren Rest D verbunden ist, wobei die Brücke B bevorzugt eine Alkylen- oder Arylen-Gruppe oder eine Kombination beider, oder - O-, -NR- oder -SiR₂- ist.
N*∩E und/oder L kann optional substituiert sein, insbesondere mit Gruppen, die die Löslichkeit des Kupfer(I)komplexes in gängigen organischen Lösungsmitteln erhöhen. Gängige organische Lösungsmittel umfassen, neben Alkoholen, Ethern, Alkanen sowie halogenierten aliphatischen und aromatischen Kohlenwasserstoffen und alkylierten aromatischen Kohlenwasserstoffen, insbesondere Toluol, Chlorbenzol, Dichlorbenzol, Mesitylen, Xylol, Tetrahydrofuran, Phenetol, Propiophenon.

In einer besonders bevorzugten Ausführungsform der Erfindung handelt es sich bei der in dem erfindungsgemäßen Verfahren eingesetzten Verbindung um einen Kupfer(I)komplex der Formel I oder III.

Das hier beschriebene Verfahren lässt sich auch mit rein organischen Materialien durchführen. Diese sollten bevorzugt eine Fluoreszenz im sichtbaren Bereich (von 400 nm bis 800 nm) aufweisen und eine Photolumineszenzquantenausbeute von mindestens 30 %, bevorzugt 50 % und besonders bevorzugt größer 70 % aufweisen. Beispiele für derartige rein organische Materialien sind para-Terphenyl, Anthracen, 2-(4-*tert*-Butylphenyl)-5-(4-phenylphenyl)-1,3,4-oxadiazol (PBD), 1,4-Bis-(5-phenyloxazol-2-yl)-benzol (POPOP), Fluorescin, Eosin und 1,4-Bis(2-methylstyryl)benzol (Bis-MSB). Je nach zu detektierender Strahlungsart ist jedoch das Vorhandensein von Atomen mit einer Ordnungszahl von ≥ 26 und/oder von Bor- oder Lithiumatomen in dem Material oder als zusätzliche erste Komponente nötig. Neutronen lassen sich beispielsweise durch BODIPY-Farbstoffe (Bordipyrromethen-Farbstoffe) gut nachweisen, da diese Bor-Atome enthalten und auch Lithiumquinolate sind für den Nachweis von Neutronen geeignet.

Die Erfindung betrifft auch die Verwendung einer oben näher beschriebenen ersten Komponente zur Umwandlung von Strahlung einer Energie im Bereich größer als 10³ eV in Strahlung einer Energie im Bereich von 0,5 eV bis 20 eV und einer oben näher beschriebenen zweiten Komponente zur Absorption von Strahlung einer Energie im Bereich von 0,5 eV bis 20 eV, die aufgrund der Absorption detektierbares Licht aussendet, zum Nachweis von Strahlung einer Energie im Bereich größer als 10³ eV.

In einer bevorzugten Ausführungsform werden die erste Komponente und die zweite Komponente auf ein zu untersuchendes Material aufgebracht und die Detektion erfolgt insbesondere ortsauflösend. Aus dem detektierten Licht können Rückschlüsse auf das Vorhandensein von Strahlung einer Energie im Bereich größer als 10³ eV und insbesondere auf die Art der Strahlung gezogen werden.

In einer weiteren Ausführungsform der Erfindung werden mehrere, bevorzugt zwei, Schichten einer ersten Komponente und einer zweiten Komponente auf das zu untersuchende Material aufgebracht, wobei die erste Komponente der ersten Schicht nicht identisch zur ersten Komponente der zweiten Schicht ist und die zweite Komponente der ersten Schicht nicht identisch zur zweiten Komponente der zweiten Schicht ist. In einer bevorzugten Ausführungsform sendet die zweite Komponente in der ersten Schicht detektierbares Licht einer anderen Wellenlänge aus als die zweite Komponente in der zweiten Schicht.

Das Aufbringen der ersten Komponente und der zweiten Komponente kann beispielsweise auch im Sprüh- oder Walzenverfahren erfolgen.

In einem Aspekt betrifft die Erfindung auch eine Zusammensetzung zur Verwendung in einem Verfahren zum Nachweis von Strahlung in einem Bereich größer als 10³ eV, insbesondere zur Verwendung in einem Verfahren wie oben beschrieben. Diese Zusammensetzung weist eine oben näher beschriebene erste Komponente zur Umwandlung von Strahlung einer Energie im Bereich größer als 10³ eV in Strahlung einer Energie im Bereich von 0,5 eV bis 20 eV und eine ebenfalls oben näher erläuterte zweite Komponente zur Absorption von Strahlung einer Energie im Bereich von 0,5 eV bis 20 eV und Aussendung von detektierbarem Licht aufgrund der Absorption auf. Bevorzugt sind erfindungsgemäße Zusammensetzungen, in denen die erste Komponente ein Atom mit einer Ordnungszahl ≥ 26 und/oder Bor oder Lithium aufweist.

In einer Ausführungsform der erfindungsgemäßen Zusammensetzung liegen die erste Komponente und die zweite Komponente zusammen in einer Verbindung oder als Salz vor, insbesondere in Form eines Übergangsmetallkomplexes, bevorzugt mit organischen Liganden. Besonders bevorzugt sind Kupfer(I)komplexe, insbesondere der oben dargestellten Formel A und der dazugehörigen Unterformeln I bis IV.

Die erfindungsgemäße Zusammensetzung weist in einer weiteren Ausführungsform weiterhin ein Matrixmaterial, insbesondere ein polymeres Matrixmaterial auf, wobei die zweite Komponente und das Matrixmaterial bevorzugt in einem Verhältnis zwischen 1:9 und 9:1 vorliegen. In einer bevorzugten Ausführungsform ist das Matrixmaterial nicht an der Umwandlung der Strahlung und/oder der Absorption der Strahlung und Aussendung von detektierbarem Licht beteiligt.

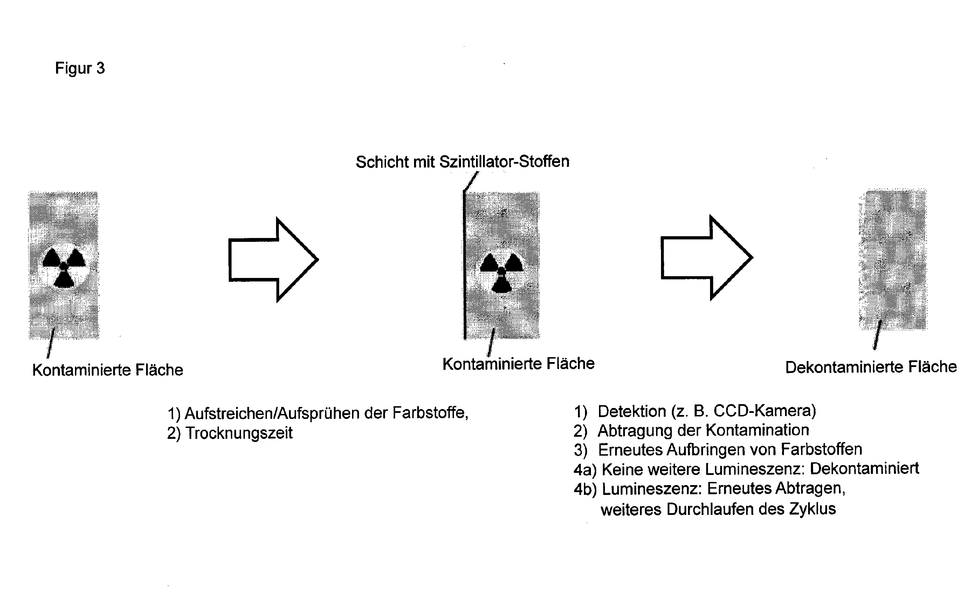

In einem weiteren Aspekt betrifft die Erfindung ein Verfahren zur Dekontamination von Flächen. Bei diesem Verfahren wird eine erste Komponente zur Umwandlung von Strahlung einer Energie im Bereich größer als 10³ eV in Strahlung einer Energie im Bereich von 0,5 eV bis 20 eV und eine zweite Komponente zur Absorption von Strahlung einer Energie im Bereich von 0,5 eV bis 20 eV, wobei die zweite Komponente aufgrund der Absorption detektierbares Licht aussendet, z. B. durch Aufstreichen oder Aufsprühen auf eine Fläche aufgebracht. Nach einem optionalen Trocknungsschritt wird das von der zweiten Komponente ausgesendete Licht detektiert, insbesondere mit einer CCD-Kamera. Nach dieser Bestimmung der Kontamination wird die Fläche, welche durch Detektion als kontaminiert bestimmt wurde, zur Dekontamination abgetragen. In einer bevorzugten Ausführungsform liegen die erste Komponente und die zweite Komponente zusammen in einer Verbindung oder als Salz, insbesondere in Form eines Übergangsmetallkomplexes, bevorzugt mit organischen Liganden, vor. Dieses Verfahren, in dem die erste und die zweite Komponente in einer Verbindung vereint sind, ist in Figur 3 schematisch dargestellt.

Optional kann zur Überprüfung, ob die Kontamination vollständig abgetragen wurde, die oben genannte erste Komponente und die oben genannte zweite Komponente erneut aufgetragen werden und sofern von der zweiten Komponente ausgesandtes Licht detektierbar ist, die Fläche, welche durch Detektion als kontaminiert bestimmt wurde, zur Dekontamination abgetragen werden. Optional werden die Schritte Abtragung, Aufbringung und Detektion, so oft wiederholt bis kein von der zweiten Komponente ausgesandtes Licht mehr detektiert wird.

### Figuren

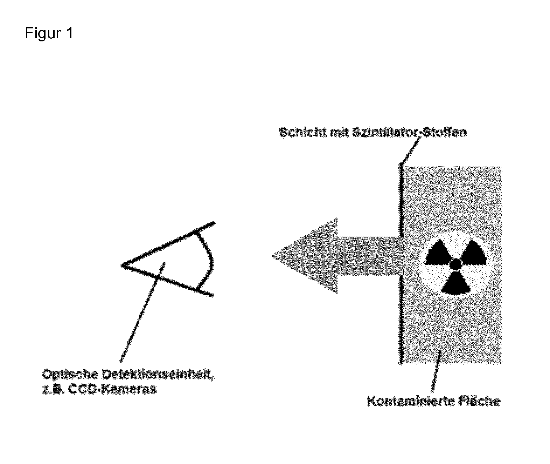

- **Figur 1:**: Messung von Strahlung mit flächig ausgebrachten, löslichen Szintillatormolekülen, wobei der Begriff Szintillatormoleküle in diesem Fall für eine erste Komponente und eine zweite Komponente im Sinne der Erfindung steht: Radioaktiv kontaminierte Flächen regen das Emittermaterial zur Lichtaussendung an; diese Lichtaussendung kann mittels optischer Technologie detektiert und ausgewertet werden.

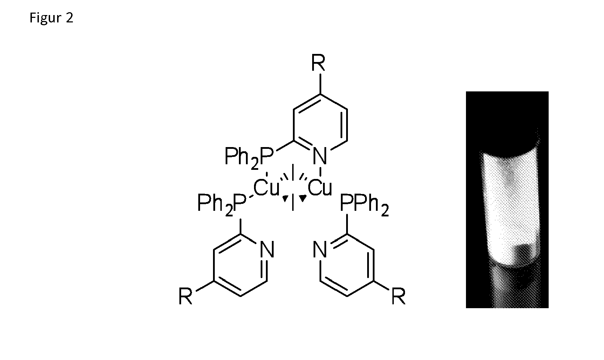

- **Figur 2:**: Tris-PyrPHOS-Bis-kupferiodid-Komplexe lassen sich elektrochemisch, mit UV-Strahlung und mit harter Röntgenstrahlung anregen.
- **Figur 3:**: Dekontamination von Gebäuden mit löslichen Szintillatoren, wobei der Begriff Szintillator-Stoffe in diesem Fall für eine erste Komponente und eine zweite Komponente im Sinne der Erfindung steht: Der Prozess kann vollautomatisiert durchführt werden.
- **Figur 4:**: Beobachtungen der im Beispiel geschilderten Versuche mit Komplexen vom Typ (PyrPHOS)₃(Cul)₂.
- **Figur 5:**: Pu-238 Strahler mit ca. 13 Bc/cm² Oberflächenaktivität. Zu sehen sind Testflächen, die mit einem lumineszierenden Kupferkomplex, dem bekannten Alpha-sensititven Szintillator Anthracen sowie als Referenzflächen Polystyrol und einem Naphthalin-basierenden Fluoreszenzfarbstoff beschichtet sind.
- **Figur 6:**: Struktur des verwendeten Kupferkomplexes, Cu₂I₂(MePyrPHOS)(P(m-Tol)₃)₂.
- **Figur 7:**: Tabelle mit den Flächen und integrierten Integralen der Testflächen aus Figur 4 (Pixel 1 oben links, Pixel 2 oben rechts). Es wurden einerseits Werte für die linken, homogenen Bereiche (links) sowie die vollen Bereiche (voll) angegeben.

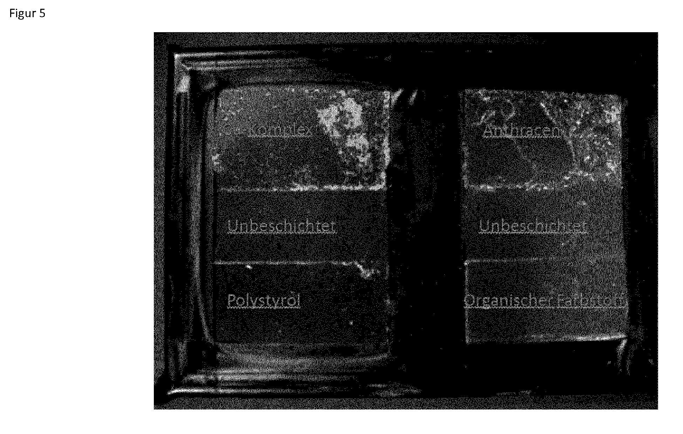

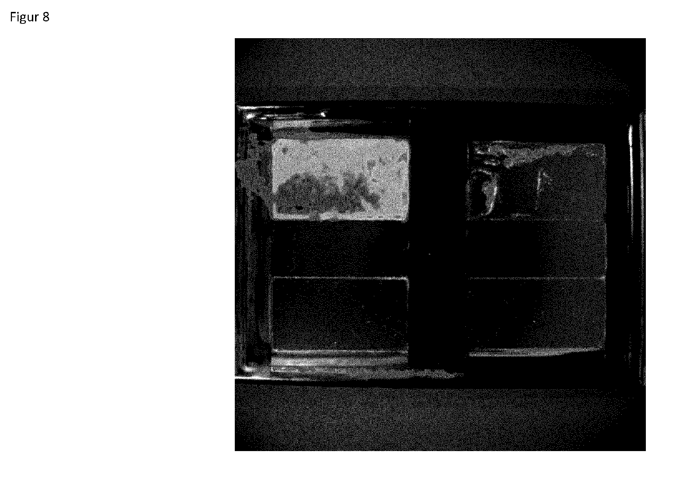

- **Figur 8:**: Sr-90 Strahler mit ca. 23 Bc/cm² Oberflächenaktivität. Zu sehen sind Testflächen, die mit einem lumineszierenden Kupferkomplex, dem bekannten Alpha-sensititven Szintillator Anthracen sowie als Referenzflächen Polystyrol und einem Naphthalin-basierenden Fluoreszenzfarbstoff beschichtet sind. In diesem Fall wurde lediglich der Kupferkomplex aus Figur 5 zur Lumineszenz angeregt. Der Komplex enthält mit Cu und I elektronenreiche Schweratome, die in Wechselwirkung mit der Betastrahlung treten, sodass nur bei dieser Verbindung ein Zählereignis detektiert werden konnte. Es traten dabei Reflexionen an den Rändern und den grobkristallinen Bereichen des Anthracen-Pixels auf.
- **Figur 9:**: Grau: Radioaktiv kontaminierte Fläche. Rot: Rot-leuchtende Schicht. Blau: Blau-Leuchtende Schicht. Im oberen Fall wird die leicht absorbierbare Alpha-Strahlung in der ersten Schicht vollständig absorbiert und sorgt dort für die Erzeugung von rotem Licht. Beta-Strahlung würde auch in die zweite Schicht gelangen und sowohl rotes als auch blaues Licht erzeugen.

### Beispiele

### Beispiel 1: Lumineszenz durch Hartröntgenstrahlung

Komplexe vom Typ (PyrPHOS)₃(Cul)₂ oder (PyrPHOS)(PPh₃)₂(CuI)₂ zeigen Elektrolumineszenz und lassen sich auch durch ultraviolettes Licht direkt anregen (Absorptionsmaximum um 360 nm/ 3.4 eV, Emissionmaximum um 550 nm (gelb-grün)).

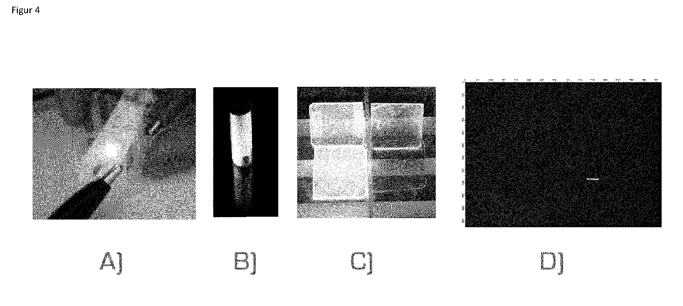

### Versuchsbeschreibung (Beobachtungen s. Figur 4):

A) Komplexe vom Typ (PyrPHOS)₃(Cul)₂ leuchten bei elektrischer Anregung als organische Leuchtdiode (Anregungsspannung bei dem im Bild gezeigten Experiment: 10 Volt). Das Emissionsmaximum des grün-gelben Lichtes liegt bei 550 nm (Figur 4A)).
B) Eine mikrokristalline Probe eines Komplexes vom Typ (PyrPHOS)₃(Cul)₂ wird mit einer Labor-UV-Lampe oder einem Fluoreszenzspektrometer beispielsweise bei 254 nm oder 366 nm angeregt. Das Licht wird mit einer geeigneten optischen Detektionseinheit ausgewertet oder mit bloßem Auge beobachtet. Es wird grün-gelbes Licht mit einem Emissionmaximum um 550 nm detektiert (Figur 4B)).
C) Eine Probe des Komplexes wurde gelöst und per Spin-Coating auf einen Glasobjektträger aufgetragen. Die Dicke der Schichten variiert von 10 nm bis ca. 100 nm. Die Schichten werden mit UV-Strahlung von 366 nm angeregt und emittieren grün-gelbes Licht. Durch die Beschichtungsbedingungen lassen sich die Dicke der Schichten und deren Morphologie steuern. In Abhängigkeit dieser Parameter variiert die Intensität der Strahlung (Figur 4C)).
D) 5 mg des Komplexes werden portionsweise mit insgesamt 25 mg Cellulose in einem Achatmörser homogeniert. Die Mischung wird zu einem Pressling gepresst (Durchmesser ca. 1 cm, Dicke ca. 1 mm). Der erhaltene Pressling wird harter Röntgenstrahlung von 9 keV ausgesetzt. Durch die energetische Anregung der ionisierenden Strahlung wird grün-gelbes Licht der Wellenlänge 550 nm ausgesendet (Figur 4D)).

Diese Komplexe sind löslich und weisen sowohl als Einkristalle als auch als amorphe Pulver sowie in Lösung und eingebracht in Matrixmaterialien wie Polystyrol, PMMA oder Cellulose diese Lumineszenz auf. Die Komplexe lassen sich auch mit hochenergetischer Strahlung, beispielsweise mit 9 keV, zu dieser Lumineszenz anregen. Die physikalischen Gründe für die Anregung unterscheidet sich bei der Elektrolumineszenz, der Photolumineszenz mit UV-Licht und der Lumineszenz durch Anregung mit harter Röntgenstrahlung erheblich, dennoch wird in allen drei Fällen dieselbe Leuchtfarbe erzielt, da jeweils die Energie über Ligand-to-Metal-Charge-Transferübergänge des Leuchtstoffes als Licht emittiert werden kann.

### Beispiel 2: Lumineszenz durch Alpha-Strahlung

Komplexe vom Typ (PyrPHOS)₃(Cul)₂ oder (PyrPHOS)(PPh₃)₂(Cul)₂ lassen sich auch durch Alphastrahlung anregen. Dazu wurde ein Teststrahler (238-Pu) mit einem Dünnfilm aus dem Komplex beschichtet.

### Versuchsbeschreibung (siehe auch Figur 5, Figur 6, Figur 7)

Ein Teststrahler (238-Pu, 13 Bq/cm2) wurde in Probeflächen unterteilt und mit vier verschiedenen Materialien durch Dropcasting beschichtet. Verwendet wurde eine 10 mg/mL Lösung in Dichlormethan, die Schichtdicke betrug dabei ca. 1 µm. (Figur 5) Die Materialien waren ein Kupferkomplex (Figur 5) mit einer Emissionslebensdauer von ca. 3 µs, der bekannte Alpha-sensitive Szintillator Anthracen sowie als Referenzproben Polystyrol und ein organischer Fluoreszenzfarbstoff.

Mit einem NightOWL II LB 983 Imagingsystem der Firma Berthold, Bad Wildbad wurde die durch die Strahlung im Material erzeugte Lumineszenz beobachtet. Dabei zeigte sich beim Kupferkomplex eine hohe Zählausbeute von rund 29.000 Photonen pro Quadratzentimeter und Sekunde, während bei Anthracen nur ein Wert von 11.500 Photonen pro Quadratzentimeter und Sekunde erzielt wurde. Die Referenzflächen Polystyrol (keine besonders begünstigte Wechselwirkung und kein Leuchtstoff) sowie der organische Fluoreszenzfarbstoff auf Naphthalinbasis (keine besonders begünstigte Wechselwirkung) wiesen keine messbare Lumineszenz auf.

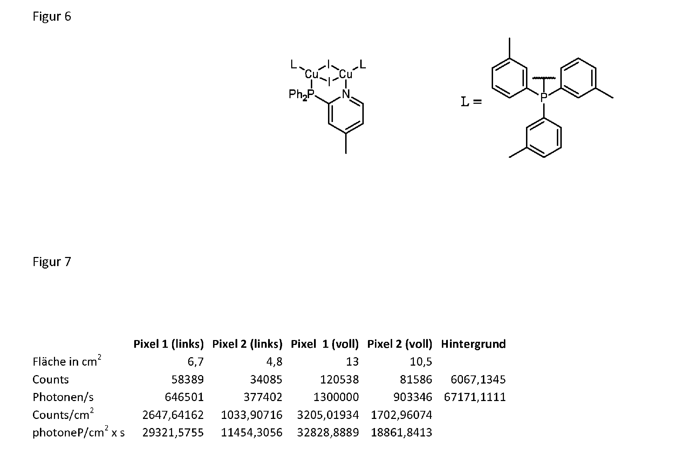

In einer Tabelle (Figur 7) sind die quantitativen Zählergebnisse gesammelt. Pixel 1 (Kupfer-Leuchtstoff) zeigte dabei rund 29.000 Photonen pro Sekunde und Quadratzentimeter, während dieser Wert für Pixel 2 (Anthracen) bei rund 19.000 Photonen pro Sekunde und Quadratzentimeter lag.

### Beispiel 3: Lumineszenz durch Beta-Strahlung

Das Experiment aus Beispiel 2 wurde mit einem Betastrahler wiederholt.

### Versuchsbeschreibung (siehe auch Figur 6, Figur 8)

Ein Teststrahler (90-Sr, 23 Bq/cm²) wurde in Probeflächen unterteilt und mit vier verschiedenen Materialien durch Dropcasting beschichtet. Verwendet wurde eine 10 mg/mL Lösung in Dichlormethan, die Schichtdicke betrug dabei ca. 1 µm. (Figur 8) Die Materialien waren ein Kupferkomplex (Figur 6) mit einer Emissionslebensdauer von ca. 3 µs, der bekannte Alpha-sensitive Szintillator Anthracen sowie als Referenzproben Polystyrol und ein organischer Fluoreszenzfarbstoff.

Lediglich der Schweratom-haltige Metallkomplex (Figur 6) zeigte in diesem Experiment Lumineszenz. Durch die Schweratome Kupfer und lod wird das Material sensitiv bezüglich einer Detektion von Betastrahlung.

## Patentansprüche

1. Verfahren zur optischen Detektion von Strahlung, aufweisend die Bereitstellung
- einer ersten Komponente zur Umwandlung von Strahlung einer Energie im Bereich größer als 10³ eV in Strahlung einer Energie im Bereich von 0,5 eV bis 20 eV und
einer zweiten Komponente zur Absorption von Strahlung einer Energie im Bereich von 0,5 eV bis 20 eV,
wobei die zweite Komponente aufgrund der Strahlungsabsorption detektierbares Licht aussendet.

2. Verfahren nach Anspruch 1, wobei das von der zweiten Komponente ausgesendete detektierbare Licht im sichtbaren Bereich liegt.

3. Verfahren nach Anspruch 1 oder 2, wobei die erste Komponente ein Atom mit einer Ordnungszahl ≥ 26 aufweist.

4. Verfahren nach Anspruch 1 bis 3, wobei die erste Komponente Bor oder Lithium aufweist.

5. Verfahren nach Anspruch 1 bis 4, wobei die zweite Komponente eine rein organische Verbindung ist.

6. Verfahren nach Anspruch 1 bis 5, wobei die erste und die zweite Komponente in organischen Lösungsmitteln löslich sind.

7. Verfahren nach Anspruch 1 bis 6, wobei die erste Komponente und die zweite Komponente zusammen in einer chemischen Verbindung oder als Salz, insbesondere in Form eines Übergangsmetallkomplexes, bevorzugt mit organischen Liganden, vorliegen.

8. Verfahren nach Anspruch 1 bis 7, wobei eine die erste und die zweite Komponente enthaltende Lösung flächig auf einen festen Träger aufgebracht wird, insbesondere durch Aufstreichen oder Aufsprühen.

9. Verfahren nach Anspruch 8, wobei die erste Komponente und die zweite Komponente in einer ersten Schicht und eine weitere erste Komponente und eine weitere zweite Komponente in einer zweiten Schicht auf den festen Träger aufgebracht werden, wobei die erste Komponente der ersten Schicht nicht identisch zur weiteren ersten Komponente der zweiten Schicht ist und die zweite Komponente der ersten Schicht nicht identisch zur weiteren zweiten Komponente der zweiten Schicht ist.

10. Verfahren nach Anspruch 9, wobei die zweite Komponente in der ersten Schicht detektierbares Licht einer anderen Wellenlänge aussendet als die weiteren zweite Komponente in der zweiten Schicht.

11. Verwendung einer ersten Komponente zur Umwandlung von Strahlung einer Energie im Bereich größer als 10³ eV in Strahlung einer Energie im Bereich von 0,5 eV bis 20 eV zusammen mit einer zweiten Komponente zur Absorption von Strahlung einer Energie im Bereich von 0,5 eV bis 20 eV, die aufgrund der Absorption detektierbares Licht aussendet, zum Nachweis von Strahlung einer Energie im Bereich größer als 10³ eV.

12. Verwendung nach Anspruch 11, wobei die erste Komponente und die zweite Komponente zum Nachweis von Strahlung einer Energie im Bereich größer als 10³ eV auf ein zu untersuchendes Material aufgebracht werden.

13. Verwendung nach Anspruch 12, wobei die erste Komponente und die zweite Komponente in einer ersten Schicht und eine weitere erste Komponente und eine weitere zweite Komponente in einer zweiten Schicht auf das zu untersuchende Material aufgebracht werden, wobei die erste Komponente der ersten Schicht nicht identisch zur weiteren ersten Komponente der zweiten Schicht ist und die zweite Komponente der ersten Schicht nicht identisch zur weiteren zweiten Komponente der zweiten Schicht ist.

14. Zusammensetzung zur Verwendung in einem Verfahren zum Nachweis von Strahlung in einem Bereich größer als 10³ eV, insbesondere zur Verwendung in einem Verfahren nach Anspruch 1 bis 10, aufweisend
- eine erste Komponente zur Umwandlung von Strahlung einer Energie im Bereich größer als 10³ eV in Strahlung einer Energie im Bereich von 0,5 eV bis 20 eV und
- eine zweite Komponente zur Absorption von Strahlung einer Energie im Bereich von 0,5 eV bis 20 eV, wobei die zweite Komponente aufgrund der Absorption detektierbares Licht aussendet.

15. Zusammensetzung nach Anspruch 14, weiterhin aufweisend
- ein Matrixmaterial, bevorzugt ein polymeres Matrixmaterial.

16. Zusammensetzung nach Anspruch 14 oder 15, wobei die erste Komponente und die zweite Komponente zusammen in einer Verbindung oder als Salz, insbesondere in Form eines Übergangsmetallkomplexes, bevorzugt mit organischen Liganden, vorliegen.

17. Verfahren zur Dekontamination einer Fläche, aufweisend die Schritte
- Aufbringen auf eine Fläche, insbesondere Aufstreichen oder Aufsprühen einer ersten Komponente zur Umwandlung von Strahlung einer Energie im Bereich größer als 10³ eV in Strahlung einer Energie im Bereich von 0,5 eV bis 20 eV und einer zweiten Komponente zur Absorption von Strahlung einer Energie im Bereich von 0,5 eV bis 20 eV, wobei die zweite Komponente aufgrund der Absorption detektierbares Licht aussendet,
- Detektion des ausgesandten Lichtes, insbesondere mit einer CCD-Kamera, zur Bestimmung einer Kontamination und
- Abtragung der durch Detektion bestimmten kontaminierten Fläche zur Dekontamination der Fläche.

18. Verfahren nach Anspruch 17, nach Abtragung der durch Detektion bestimmten kontaminierten Fläche aufweisend die Schritte
- Aufbringen einer ersten Komponente zur Umwandlung von Strahlung einer Energie im Bereich größer als 10³ eV in Strahlung einer Energie im Bereich von 0,5 eV bis 20 eV und einer zweiten Komponente zur Absorption von Strahlung einer Energie im Bereich von 0,5 eV bis 20 eV, wobei die zweite Komponente aufgrund der Absorption detektierbares Licht aussendet,
- Detektion des ausgesandten Lichtes zur Bestimmung einer Kontamination und
- optional Wiederholung der Schritte Abtragung, Aufbringung und Detektion, sofern von der zweiten Komponente ausgesandtes Licht detektierbar ist.
